(19) Europäisches Patentamt
European Patent Office
Office européen des brevets

(11) Veröffentlichungsnummer : **0 326 605 B1**

(12) # EUROPÄISCHE PATENTSCHRIFT

(45) Veröffentlichungstag der Patentschrift :
**24.04.91 Patentblatt 91/17**

(51) Int. Cl.⁵ : **F28F 1/22, G21C 15/12**

(21) Anmeldenummer : **88907058.7**

(22) Anmeldetag : **28.07.88**

(86) Internationale Anmeldenummer :
**PCT/EP88/00683**

(87) Internationale Veröffentlichungsnummer :
**WO 89/01122 09.02.89 Gazette 89/04**

(54) **WÄRMEÜBERTRAGENDE WAND, DIE AUS ZWEI PLATTENARTIGEN TEILEN ZUSAMMENGESETZT IST.**

(30) Priorität : **04.08.87 CH 2987/87**

(43) Veröffentlichungstag der Anmeldung :
**09.08.89 Patentblatt 89/32**

(45) Bekanntmachung des Hinweises auf die
Patenterteilung :
**24.04.91 Patentblatt 91/17**

(84) Benannte Vertragsstaaten :
**DE FR GB IT**

(56) Entgegenhaltungen :
**DE-A- 1 764 351**
**GB-A- 769 929**
**GB-A- 826 625**

(73) Patentinhaber : **GEBRÜDER SULZER**
**AKTIENGESELLSCHAFT**
**Zürcherstrasse 9**
**CH-8401 Winterthur (CH)**

(72) Erfinder : **SCHWEIZER, Sandro**
**Hofmannspüntstrasse 14**
**CH-8542 Wiesendangen (CH)**

EP 0 326 605 B1

## Beschreibung

Die Erfindung betrifft eine aus zwei Teilen zusammengesetzte, wärmeübertragende Wand zum Trennen zweier unterschiedliche Temperaturen aufweisender Räume.

Es ist als interner Stand der Technik eine solche Wand bekannt, bei der mehrere im wesentlichen zueinander parallele Rohrabschnitte zwischen den plattenartig ausgebildeten Teilen eingeschlossen sind und mit mindestens dem einen Teil in wärmeleitender Verbindung stehen. Die Rohrabschnitte führen ein strömendes Medium und weisen kreisrunden Querschnitt auf. Die beiden plattenartigen Teile sind entlang einer Grenzfläche miteinander fest verbunden, die sich im wesentlichen parallel zu den beiden Hauptrichtungen der Wand erstreckt und aus Montagegründen zwischen den plattenartigen Teilen im Bereich der Fläche liegt, in der sich auch die Längsachsen der Rohrabschnitte erstrecken. Die Rohrabschnitte liegen also je zur Hälfte ihres Querschnitts in entsprechenden kanalartigen Ausnehmungen der beiden plattenartigen Teile. Da die Ausnehmungen beider Wandteile genau aufeinander und um die Rohrabschnitte herum passend angeordnet sein müssen, sind die Genauigkeitsanforderungen an die Herstellung einer solchen Wand sowie die Kosten recht hoch.

Der Erfindung liegt die Aufgabe zugrunde, die bekannte wärmeübertragende Wand so zu verbessern, dass sie bei gleichguter Funktionsfähigkeit mit bedeutend geringerem Kostenaufwand herstellbar ist.

Diese Aufgabe wird erfindungsgemäss durch die Merkmale des Anspruchs 1 gelöst. Dieser Lösung liegt die Erkenntnis zugrunde, dass wegen der unterschiedlichen Temperaturen in den durch die Wand voneinander getrennten Räumen die Wärmeleitung durch die Wand zum grössten Teil einem der beiden Wandteile zugeordnet werden kann. Das andere Wandteil dient dann in erster Linie als Deck- und/oder Versteifungselement. Es entfallen dadurch kanalartige Ausnehmungen zur Aufnahme von Rohrabschnitten in dem Wandteil, der dem die niedrige Temperatur aufweisenden Raum zugewendet ist. Es entfällt damit auch die Notwendigkeit, in beiden Wandteilen Ausnehmungen aufeinander und um die Rohrabschnitte herum genau anzupassen. In der neuen Wand ist also der Aufwand für das Anpassen beträchtlich reduziert. Auch das Zusammenbauen der neuen Wand ist wesentlich einfacher, wobei ein Beschädigen der Rohrabschnitte während des Zusammenbringens der beiden Wandteile praktisch ausgeschlossen ist. Vorteilhaft ist auch, dass die Rohrabschnitte in nur einem Wandteil befestigt werden können und dann mit diesem zusammen als eine bauliche Einheit gehandhabt werden können.

Das Vermeiden von Beschädigungen der Rohrabschnitte während der Montage ist dann besonders wichtig, wenn die Wand unter schwierigen Betriebsbedingungen eingesetzt werden soll. Dies ist zum Beispiel der Fall, wenn auf die Wand gleichzeitig hohe Drücke und Temperaturen einwirken, eventuell noch mit Belastungen durch radioaktive Strahlen kombiniert.

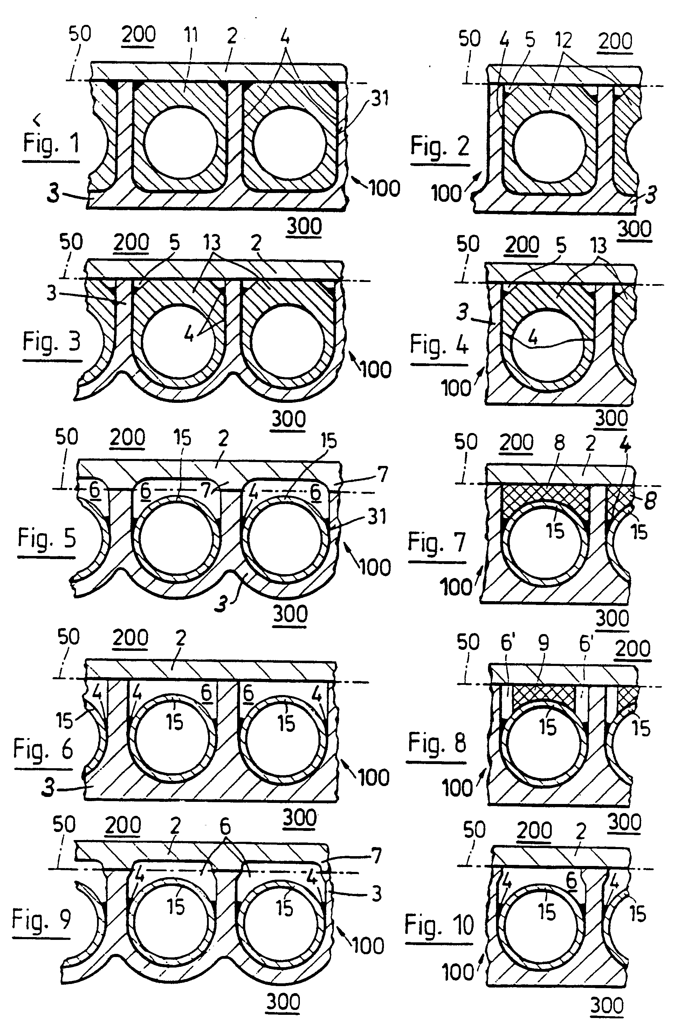

Einige Ausführungsbeispiele der Erfindung werden in der folgenden Beschreibung anhand der Zeichnung näher erläutert, die in Fig. 1 bis 10 je einen Teilquerschnitt einer Wand nach der Erfindung darstellt.

Gemäss Fig. 1 trennt eine metallische, ebene, wärmeübertragende Wand 100 einen heissen Raum 300 von einem kühleren Raum 200. Die Wand 100 setzt sich aus zwei Teilen 2 und 3 und in ihr eingeschlossenen geraden Rohrabschnitten 11 zusammen. Die Rohrabschnitte verlaufen zueinander parallel und sind von einem Kühlmittel, z.B. Wasser, durchströmt, das durchschnittlich etwa die gleiche Temperatur hat wie der kühlere Raum 200. Der äussere Umriss der Rohrabschnitte 11 ist rechteckig. Jeder Rohrabschnitt ist in einer kanalartigen Ausnehmung 31 des Wandteiles 3 eingebettet. Dabei berühren etwa drei Viertel des äusseren Umfangs jedes Rohrabschnitts 11 wärmeleitend die Begrenzungsfläche der zugehörigen Ausnehmung 31. Die Ecken der Ausnehmungen sind gerundet, und die ihnen zugeordneten Ecken der Rohrabschnitte 11 sind entsprechend angepasst, so dass ein guter Wärmefluss zwischen dem dickeren Wandteil 3 und den Rohrabschnitten stattfindet. Die Rohrabschnitte 11 sind mittels Lotgut 4 in den Ausnehmungen 31 befestigt. Der dünnere Wandteil 2, der wie eine Blechplatte ausgebildet ist, ist gasdicht entlang einer ebenen Grenzfläche 50 mit dem dickeren Wandteil 3 verbunden. Etwa ein Viertel der äusseren Oberfläche eines jeden Rohrabschnittes 11 erstreckt sich entlang der Grenzfläche 50 und berührt im zusammengebauten Zustand der Wand den Teil 2. Der lichte Querschnitt der Rohrabschnitte ist kreisförmig und bezüglich des Gesamtquerschnitts jedes Rohrabschnittes vom Zentrum weg zum heisseren Raum 300 hin verschoben.

Zwecks Herstellung einer Wand nach Fig. 1 werden die Rohrabschnitte 11 zusammen mit je einer Lotfolie als Zwischenlage in die Ausnehmungen 31 des dickeren Wandteils 3 eingelegt; durch Aufheizen werden die Rohrabschnitte mit dem Teil 3 verlötet, wodurch die wärmeleitende Verbindung entsteht. Danach werden die einander zugewendeten Flächen der beiden Teile 2 und 3 sowie die noch freien Oberflächen der Rohrabschnitte 11 mechanisch bearbeitet, um ein einwandfreies, glattes Anliegen der Teile entlang der Grenzfläche 50 zu gewährleisten. Anschliessend wird das dünnere Wandteil 2, z.B. durch Hartlöten, Diffusionslöten oder -schweissen oder auch durch Sprengplattieren, mit dem dickeren Wandteil 3 entlang der Grenzfläche dicht verbunden.

Dank dieses Herstellungsverfahrens berührt jeder Rohrabschnitt 11 auch den Teil 2, so dass der ganze Umfang jedes Rohrabschnittes am guten Wärmefluss in der Wand 100 beteiligt ist.

Die Ausführungsform nach Fig. 2 unterscheidet sich lediglich von derjenigen nach Fig. 1 dadurch, dass die aussen rechteckigen Rohrabschnitte 12 an den dem dünneren Wandteil 2 zugewendeten Kanten relativ viel abgeschrägt sind, so dass Rillen 5 entstehen. In diese Rillen wird Lötmaterial, z.B. in Form von Drähten, eingelegt, das beim Einlöten der Rohrabschnitte 12 nachfliessen kann. Die Rillen 5 können so gross gewählt werden, dass nach dem Fertigstellen der Wand 100 durchgehende Kanäle 5 freibleiben, die der Kontrolle und gegebenenfalls Abfuhr von Leckagen dienen können.

In den Ausführungsbeispielen gemäss Fig. 3 und 4 sind Rohrabschnitte 13 vorgesehen, deren dem dünneren Wandteil 2 zugewendete Seite jeweils rechteckig und deren dem Teil 2 abgewendete Seite jeweils halbkreisförmig ausgebildet sind, wodurch – bei entsprechend angepasster Ausnehmung – eine Vergleichmässigung des Wärmeflusses und der mechanischen Spannungen erreicht wird. Gemäss Fig. 3 ist die dem Raum 300 begrenzende Fläche des Teils 3 der Halbkreiskontur der Rohrabschnitte angepasst, so dass der Teil 3 im wesentlichen eine konstante Wanddicke aufweist. Im Beispiel nach Fig. 4 haben die Rohrabschnitte 13 und die Ausnehmungen den gleichen Umriss wie in Fig. 3, jedoch ist die dem Raum 300 zugewendete Fläche des Teils 3 nicht gewellt, sondern eben ausgebildet.

In den Ausführungsbeispielen nach Fig. 5 bis 10 werden übliche, kreisrunde Rohre 15 verwendet. Die Varianten nach Fig. 5, 6, 9 und 10 sind bei relativ geringen Wärmemengen anwendbar. Bei ihnen bleibt zwischen den Rohren 15 und dem dünneren Wandteil 2 ein freier Raum 6, der – ähnlich den Rillen oder kleinen Kanälen 5 in Fig. 2, 3 und 4 – der Kontrolle und eventuell der Abfuhr von Leckagen dienen kann.

Bei den Wänden nach Fig. 5 und 9 ist das dickere Wandteil 3 hinsichtlich seiner dem Raum 300 zugewendeten Fläche jeweils gleich ausgebildet, wie bei dem Beispiel nach Fig. 3. Dagegen weisen die dünneren Wandteile 2 Rippen 7 auf, die je mit einem Steg zwischen zwei benachbarten Ausnehmungen fluchten und sich mit diesen Stegen entlang der Grenzfläche 50 treffen. Die Grenzfläche ist zwischen den beiden Wandteilen 2 und 3 in einem Bereich niedrigerer mechanischer Belastung angeordnet.

Die Stege sind in Fig. 9 und 10 im Bereich der Grenzfläche 50 flanschartig verbreitert, so dass trotz einer dünnwandigen Konstruktion eine genügend grosse Verbindungsfläche zwischen den Teilen 2 und 3 vorhanden ist.

Die Ausführungsbeispiele nach Fig. 7 und 8 sind konstruktiv grundsätzlich gleich ausgebildet wie das in Fig. 6, jedoch ist jeweils im Raum 6 Füllmaterial in Form von Profilstäben 8 bzw. 9 angeordnet, die zwischen den Rohren 15 und dem dünneren Wandteil 2 eingelötet sind. Bei Fig. 7 füllt jedes Profil 8 den ganzen Zwischenraum, wogegen bei Fig. 8 beidseitig des Profilstabes 9 schmale Räume 6' freibleiben, die der Kontrolle und allfälligen Abfuhr von Leckagen dienen.

Obwohl sich alle Beispiele auf eine ebene Wand mit parallelen, geraden Rohrabschnitten beziehen, kann die Wand auch gekrümmte Form haben, wobei die parallelen Rohre entweder ebenfalls der Krümmung folgen oder quer zur Krümmung parallel angeordnet sind. Die Grenzfläche zwischen den beiden Teilen 2 und 3 verläuft dann ebenfalls der Krümmung entsprechend. Die Rohrabschnitte sind bezüglich des Kühlmittelstromes im allgemeinen parallel geschaltet ; es ist aber auch eine Reihenschaltung möglich.

Die Wand nach der Erfindung ist in verschiedenen technischen Gebieten anwendbar, z.B. bei chemischen Reaktoren, in Nuklearanlagen oder auch im Gebiet der Tieftemperaturtechnik. Bei den Ausführungsformen nach Fig. 7 und 8 besteht die Möglichkeit, die Rohre durch Sprengschweissen oder hydraulisches Aufweiten mit den umgebenden Wandungsteilen zu verbinden.

**Ansprüche**

1. Aus zwei Teilen (2, 3) zusammengesetzte, wärmeübertragende Wand (100) zum Trennen zweier unterschiedliche Temperaturen aufweisender Räume (200, 300), mit mehreren im wesentlichen zueinander parallelen, in der Wand (100) eingeschlossenen und mit mindestens dem einen Teil in wärmeleitender Verbindung stehenden Rohrabschnitten (11, 12, 13, 15), die ein strömendes Medium führen, wobei die beiden Teile (2, 3) entlang einer Grenzfläche (50), die sich im wesentlichen parallel zu den beiden Hauptrichtungen der Wand (100) erstreckt, miteinander fest verbunden sind, wobei die beiden Teile (2, 3) unterschiedlich dick ausgebildet sind, indem der dickere Teil (3) kanalartige Ausnehmungen (31) zur Aufnahme jeweils eines Rohrabschnitts (11, 12, 13, 15) und zwischen diesen Ausnehmungen Stege aufweist, die soweit bis zum dünneren Teil (2) reichen, dass die zwischen diesen Stegen einerseits und dem dünneren Teil (2) andererseits verlaufende Grenzfläche (50) ausserhalb des äusseren Umrisses der Rohrabschnitte (11, 12, 13, 15) liegt, und wobei der die Rohrabschnitte enthaltende, dickere Teil (3) dem die höhere Temperatur aufweisenden Raum (300) zugewendet ist.

2. Wand nach Anspruch 1, dadurch gekennzeichnet, dass der äussere Umriss jedes Rohrabschnittes (15) kreisförmig ist und der die Rohrabschnitte enthaltende Teil (3) Ausnehmungen (31) aufweist, die auf ihrer dem die höhere Temperatur aufweisenden Raum (300) zugewendeten Seite der Kreisform angepasst sind.

3. Wand nach Anspruch 1, dadurch gekennzeichnet, dass der äussere Umriss jedes Rohrabschnittes (11, 12) rechteckig ist und der die Rohrabschnitte enthaltende Teil (3) dem reckteckigen Umriss angepasste Ausnehmungen (31) aufweist.

4. Wand nach Anspruch 1, dadurch gekennzeichnet, dass der äussere Umriss jedes Rohrabschnittes (13) auf der der Grenzfläche (50) zugewendeten Seite reckteckig und auf der Grenzfläche (50) abgewendeten Seite halbkreisförmig ausgebildet ist und der die Rohrabschnitte enthaltende Teil (3) dem Umriss angepasste Ausnehmungen aufweist.

5. Wand nach Anspruch 3 oder 4, dadurch gekennzeichnet, dass der lichte Querschnitt jedes Rohrabschnittes (11, 12, 13) bezüglich des Zentrums des Rohrgesamtquerschnitts zu dem die höhere Temperatur aufweisenden Raum (300) hin verschoben ist.

6. Wand nach einem der Ansprüche 1 bis 5, dadurch gekennzeichnet, dass die Stege im Bereich der Grenzfläche (50) flanschartig verbreitert sind.

7. Wand nach einem der Ansprüche 1 bis 6, dadurch gekennzeichnet, dass der dünnere Teil (2) zu den Stegen korrespondierende Rippen (7) aufweist, die entlang der Grenzfläche (50) mit den Stegen verbunden sind.

8. Wand nach einem der Ansprüche 1 bis 7, dadurch gekennzeichnet, dass die in den Ausnehmungen (31) befindlichen Rohrabschnitte (11, 12, 13, 15) mit dem dickeren Teil (3) durch eine flächige Lötung verbunden sind.

9. Wand nach einem der Ansprüche 1 bis 8, dadurch gekennzeichnet, dass der dünnere Teil (2) an den Rohrabschnitten (11, 12, 13) anliegt.

10. Wand nach einem der Ansprüche 1 bis 8, dadurch gekennzeichnet, dass in den Ausnehmungen (31) zwischen den Rohrabschnitten (15) und dem dünneren Teil (2) Füllmaterial (8, 9) angeordnet ist.

11. Wand nach einem der Ansprüche 1 bis 10, dadurch gekennzeichnet, dass die Teile (2, 3) durch Sprengplattieren miteinander verbunden sind.

## Claims

1. A heat-transmitting wall (100) made up of two parts (2, 3) and adapted to separate two chambers (200, 300) at different temperatures, comprising a plurality of substantially parallel tube sections (11, 12, 13, 15) enclosed in the wall (100) and in thermally conductive communication with at least one of the said two parts, the said tube sections carrying a flowing medium and the two parts (2, 3) being rigidly interconnected along a boundary surface (50) extending substantially parallel to the two main directions of the wall (100), the two parts (2, 3) being of different thicknesses, the thicker part (3) having recesses (31) in the form of ducts each adapted to receive a tube section (11, 12, 13, 15) and webs between said recesses, said webs so extending as far as the thinner part (2) that the boundary surface (50) extending between the said webs, on the one hand, and the thinner part (2), on the other hand, is situated outside the outer contour of the tube sections (11, 12, 13, 15), and the thicker part (3) which contains the tube sections faces the higher-temperature chamber (300).

2. A wall according to Claim 1, characterised in that the outer contour of each tube section (15) is circular and the part (3) which contains the tube sections has recesses (31) which are adapted to the circular shape on their side facing the higher-temperature chamber (300).

3. A wall according to Claim 1, characterised in that the outer contour of each tube section (11, 12) is rectangular and the part (3) containing the tube sections has recesses (31) adapted to the rectangular contour.

4. A wall according to Claim 1, characterised in that the outer contour of each tube section (13) is rectangular on the side facing the boundary surface (50) and semi-circular on the side remote from the boundary surface (50) and the part (3) containing the tube sections has recesses adapted to the contour.

5. A wall according to Claim 3 or 4, characterised in that the inside cross-section of each tube section (11, 12, 13) is offset towards the higher-temperature chamber (3) with respect to the centre of the total tube cross-section.

6. A wall according to any one of Claims 1 to 5, characterised in that the webs are widened in the form of flanges in the area of the boundary surface (50).

7. A wall according to any one of Claim 1 to 6, characterised in that the thinner part (2) has ribs (7) corresponding to the webs and connected thereto along the boundary surface (50).

8. A wall according to any one of Claims 1 to 7, characterised in that the tube sections (11, 12, 13, 15) situated in the recesses (31) are connected to the thicker part (3) by surface soldering.

9. A wall according to any one of Claims 1 to 8, characterised in that the thinner part (2) bears against the tube sections (11, 12, 13).

10. A wall according to any one of Claims 1 to 8, characterised in that filler material (8, 9) is disposed in the recesses (31) between the tube sections (15) and the thinner part (2).

11. A wall according to any one of Claims 1 to 10, characterised in that the parts (2, 3) are interconnected by explosion plating.

## Revendications

1. Cloison (100) de transfert de chaleur, formée de deux parties assemblées (2, 3) et destinée à la séparation de deux espaces (200, 300) qui sont à des températures différentes, de multiples tronçons de tube (11, 12, 13, 15), dans lesquels circule un fluide, qui sont sensiblement parallèles et sont renfermés dans la cloison (100), étant en liaison de conduction de chaleur avec au moins l'une des parties de cette dernière, les deux parties de cloison (2, 3) étant fixées l'une à l'autre le long d'une interface (50) qui est sensiblement parallèle aux deux directions principales de la cloison (100), les deux parties de cloison (2, 3) ayant des épaisseurs différentes, la partie épaisse (3) comportant des cavités (31) en forme de canaux dont chacun est destiné à loger un tronçon de tube (11, 12, 13, 15), ladite partie épaisse (3) de cloison comportant entre ces cavités des nervures qui se prolongent suffisamment vers la partie mince (2) pour que l'interface (50) située entre d'une part ces nervures et d'autre part la partie mince (2) se trouve à l'extérieur du contour extérieur des tronçons de tube (11, 12, 13, 15) et la partie épaisse (3) de la cloison qui renferme les tronçons de tube étant tournée vers l'espace (300) qui est à la température la plus élevée.

2. Cloison selon la revendication 1, caractérisée en ce que le contour extérieur de chaque tronçon de tube (15) est circulaire et la partie (3) de cloison qui loge les tronçons de tube comporte des cavités (31) dont le côté tourné vers l'espace (300) qui est à la température la plus élevée épouse ladite forme circulaire.

3. Cloison selon la revendication 1, caractérisée en ce que le contour extérieur de chaque tronçon de tube (11, 12) est rectangulaire et la partie (3) de cloison qui loge les tronçons de tube comporte des cavités (31) dont la forme est complémentaire de celle de ce contour rectangulaire.

4. Cloison selon la revendication 1, caractérisée en ce que le contour extérieur de chaque tronçon de tube (13) est rectangulaire du côté tourné vers l'interface (50) et semi-circulaire du côté tourné à l'opposé de l'interface (50) et la partie (3) de cloison qui loge les tronçons de tube comporte des cavités dont la forme est complémentaire de celle de ce contour.

5. Cloison selon la revendication 3 ou 4, caractérisée en ce que la section interne de chaque tronçon de tube (11, 12, 13) est décalée par rapport au centre de la section globale des tubes vers l'espace (300) qui est à la température la plus élevée.

6. Cloison selon l'une des revendications 1 à 5, caractérisée en ce que les nervures sont élargies en forme d'ailes dans la région de l'interface (50).

7. Cloison selon l'une des revendications 1 à 6, caractérisée en ce que la partie mince (2) de cloison comporte des ailettes (7) qui sont en correspondance avec les nervures et qui sont reliées à ces dernières le long de l'interface (50).

8. Cloison selon l'une des revendications 1 à 7, caractérisée en ce que les tronçons de tube (11, 12, 13, 15) situés dans les cavités (31) sont reliés à la partie épaisse (3) de la cloison par brasage en nappe.

9. Cloison selon l'une des revendications 1 à 8, caractérisée en ce que la partie mince (2) de cloison est appliquée contre les tronçons de tube (11, 12, 13).

10. Cloison selon l'une des revendications 1 à 8, caractérisée en ce qu'une matière de remplissage (8, 9) est disposée dans les cavités (31), entre les tronçons de tube (15) et la partie mince (2) de la cloison.

11. Cloison selon l'une des revendications 1 à 10, caractérisée en ce que les parties (2, 3) de la cloison sont reliées par placage par explosion.

Fig. 1

Fig. 2

Fig. 3

Fig. 4

Fig. 5

Fig. 7

Fig. 6

Fig. 8

Fig. 9

Fig. 10

6